# EUROPEAN PATENT APPLICATION

(11) **EP 2 719 749 A1**
(43) Date of publication of application: **16.04.2014**
(21) Application number: 13185916.7
(22) Date of filing: 25.09.2013
(51) Int. Cl.: C10L 5/10, C10L 5/36, C10L 9/08

(54) **Process for the production of a fuel briquette**

(30) Priority: 09.10.2012 GB 201218085
(71) Applicant: Coal Products Limited, Sheffield S21 1TZ (GB)
(72) Inventor: Rogers, Paul, Northwich, Cheshire CW9 8WX (GB); Bishop, Andrew, Grimsby, Lincolnshire DN36 4YF (GB)
(74) Representative: Stainthorpe, Vanessa Juliet

(57) **Abstract**

A process for the production of a fuel briquette comprising the steps of:
a) providing components comprising: biomass; and, coal and/or petroleum coke;
b) mixing the components;
c) drying the components;
d) crushing the components;
e) forming a feedstock by mixing the components with a binder in the following proportions:

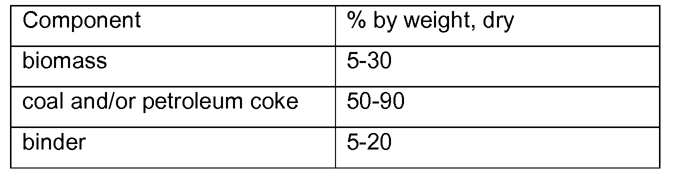

f) briquetting the feedstock; and, after steps a) - f) have been performed
g) curing the binder and torrefying the briquette.

## Description

This invention relates to a method for manufacturing a fuel briquette for use in domestic open fires and multifuel stoves. This invention also relates to the manufactured briquette.

### BACKGROUND

Briquettes are manufactured lumps of fuel used in domestic and other fires and furnaces. Generally they contain coal or coke that has been granulated or powdered, mixed with a binder and then compressed and heated to consolidate the product. Many processes and variations exist and briquettes are characterized by a number of different parameters ranging from:
- Heat output
- Burn time
- Appearance
- Ease of ignition
- Smoke

As detailed in the applicant's earlier UK Patent, GB2448531, the last of these is very important in the UK and other countries where regulations demand that smoke generation is kept to a minimum at certain locations (smoke control areas) such that generally only smokeless fuels can be burned. At the same time, customers want to retain the pleasing aspects that fires provide. Important amongst these is the appearance of the fire, or the "flame picture" as it is also described. Aesthetically pleasing flame pictures may be achieved when volatile hydrocarbons and other gases being driven from the solid fuel by the heat of the fuel are burnt in the air adjacent to the fuel. This gives the warm and aesthetically pleasing appearance of open fires and stoves, particularly when the fuel includes materials that have a high volatile content, such as wood.

Including wood in briquettes is known and may improve the flame picture. Furthermore, wood provides clear environmental benefits since it comes from a renewable resource and does not add to the net carbon content of the atmosphere when compared with burning coal, for example. This gives wood a low carbon foot-print and makes its inclusion in briquettes preferable. However, coupled with its short burn time and low heat output, wood produces smoke that does not comply with, at least, current UK smoke control legislation.

GB2448531 describes a briquette that both includes wood, or other forms of biomass, and complies with at least current UK smoke control legislation. The biomass is torrefied prior to its inclusion in the briquette. Torrefaction is achieved in an inert atmosphere having a temperature in the region of 250-350°C. The process removes many of the smoke producing volatile components from the wood whilst leaving sufficient residual volatile matter content to give enhanced burning characteristics performance, e.g. an improved flame picture. Inclusion of torrefied biomass in a briquette provides a fuel that is compliant with strict smoke regulations and attractive to the customer. However, torrefaction of biomass is expensive.

The prior art also shows the inclusion of untreated wood in a briquette. RU-C-2098461 suggests the production of a briquetted fuel, comprising mixing milled coal, milled waste from wood processing industry (milling wood), hydrocarbon containing binder and water. The briquettes are formed from the mixture under large pressures up to 20 MPa and are dried before being thermally treated at 350-500°C to carbonize the briquettes and achieve a porosity of 30-60%. Such briquettes are easily ignited, generate no smoke on burning and have autonomic burning capability. The briquettes also have a short burn time of the order of 25 minutes. Such short burn times may be undesirable for many domestic and industrial applications. The use of milling wood is also problematic because of its elastic and compressible nature. This means that the briquettes are prone to breakage during thermal treatment, particularly at low temperatures. Large formation pressures may well overcome this by sufficiently compressing the material. However, achieving large pressures is expensive.

Biomass, such as that used in GB2448531 can also be elastic and compressible in nature. GB2448531 teaches that torrefaction of the biomass prior to its inclusion in the briquette overcomes the problems with the prior art. However, briquettes produced with torrefied wood addition rates of above 15% were found to be prone to breakage and auto-ignition during the briquette curing stage. Furthermore, as previously mentioned, torrefaction of the biomass adds notable expense to the briquette formation process.

The prior art teaches that volatile matter can be removed through torrefaction of the wood. GB2448531 achieves a reduced volatile matter content of between 30% and 75% by weight.

It is an object of the present invention to address the problems identified above.

### BRIEF SUMMARY OF THE DISCLOSURE

In accordance with the present invention there is provided a process for the production of a fuel briquette comprising the steps of:
a) providing components comprising: biomass, with coal and/or petroleum coke;
b) mixing the components;
c) drying the components;
d) crushing the components;
e) forming a feedstock by mixing the components with a binder in the following proportions:

| Component | % by weight, dry |
|---|---|
| biomass | 5-30 |
| coal and/or petroleum coke | 50-90 |
| binder | 5-20 |

f) briquetting the feedstock and curing the binder; and, after steps a) - f) have been performed
g) curing the binder and torrefying the briquette;

Preferably the torrefied briquette comprises between 10% and 35% by weight volatile hydrocarbons.

Preferably, said biomass comprises wood-like and non-wood-like biomass such as: sugar cane waste; forestry strippings; wheat grain; nut kernels; olive stone; tree bark; straw; bran; waste wood; etc. The biomass is preferably sourced to be substantially inelastic. The inelastic nature of the biomass permits efficient processing and briquetting of the feedstock.

Where the feedstock comprises coal, it is preferable for the coal to comprise between 20% and 90% by weight anthracite, optionally between 40% and 70% by weight. This is preferable for a smokeless fuel. However, where smoke generation is not important, or if certain appliances are being employed that reduce smoke generation (such appliances may be exempted from requirement to burn smokeless fuel by virtue of their performance), then said coal may comprise bituminous coal. Even in a smokeless fuel, there may be up to 30% by weight of said bituminous coal and optionally there is between 5% and 20% by weight thereof.

The torrefying step occurs after the briquette has been formed. Accordingly, the torrefaction may be called "in situ torrefaction" because the biomass is torrefied once it is in situ within the briquette. Torrefaction preferably occurs at a temperature between 250°C and 350°C, optionally 275°C and 325°C, and further optionally between 290°C and 310°C. Said torrefying step may occur in a controlled atmosphere, wherein said atmosphere is substantially inert and is supported by the release of water vapour, volatile matter and gases from the briquetted feedstock as it is heated, said gases progressively displacing air from the atmosphere as the feedstock is heated. Said displaced air preferably comprises oxygen. Optionally, said inert atmosphere is further maintained by injecting inert gas (e.g. nitrogen or steam) into said atmosphere. The controlled atmosphere is maintained and controlled by a flow of hot, post-combustion gases (from natural gas burners) that provides heat to the briquettes and by moisture, volatiles and gases released by the heated briquettes.

Because the atmosphere in the curing oven contains relatively low levels of oxygen, some oxidation of biomass particles is possible, particularly those situated towards the surface of the briquettes. The extent of oxidation will partly depend upon the characteristics (e.g. reactivity) of the biomass type. In practice, the degree of oxidation of biomass particles at the briquette surface has been found to be very slight to negligible; as evident from a good surface appearance (e.g. lack of surface pitting, irregularities and ashing) of the final product. The biomass particles contained within the body of the briquette are even less likely to undergo oxidation. This is because the particles are held bound, encapsulated and compacted in close contact with coal and petroleum coke particles within the briquette matrix. The coal and petroleum coke particles are reductants and therefore serve to preserve a localised, oxygen free environment within the briquette structure; thereby facilitating partial devolatilisation of biomass without significant combustion (i.e. torrefaction). Furthermore, the release of volatile materials from the biomass during heat treatment serves to support the maintenance of an oxygen free environment within the briquettes. The heat required for the curing and torrefaction processes is preferably provided by the combustion gases from natural gas burners.

Torrefaction has the advantage of reducing volatile matter (hydrocarbons) in the briquette, and particularly the biomass part of the briquette. "Volatile matter" is determined in accordance with British Standard BS 1016 Part 104.3 (ISO 562). The test involves heating fine coal/biomass (crushed to BSS-72 mesh) to 900°C for 7 minutes in an oxygen starved environment.

The emission of smoke during the domestic combustion of carbonaceous materials is broadly directly related to the material's volatile matter content. For this reason, in a standard smokeless fuel briquette the proportion of high volatile bituminous coal is usually controlled at a maximum of 20% addition, to allow the final product to comply with UK Smoke Control legislation. It is possible to include at least 15% biomass, in addition to the standard amount of high volatile bituminous coal in the feedstock mix, whilst still yielding a smokeless product, and this is despite the higher volatile matter content of biomass. This demonstrates that the torrefaction process successfully removes many of the smoke producing volatile components, whilst leaving sufficient residual volatile matter content to give some enhanced performance characteristics on a domestic fire. Also, it is considered that the burn characteristics of briquettes according to the invention result in burning of more of the smoke released than is the case with conventional fuels. The rapidly established flame picture during combustion of the briquettes reduces smoke emission by efficiently combusting released volatile components. The volatile matter content of the briquette will depend on the level of biomass inclusion in the feedstock blend and on the relative proportions of anthracite/petroleum coke and bituminous coal. Briquette volatiles could range between 10% and 35% (approx) depending on the level of biomass addition and the type of briquette formulation (eg smokeless, non smokeless, open fire and closed appliance.).

Torrefaction of the briquetted biomass may be terminated by quenching the briquette in water, or dry cooling the briquette using an inert gas.

In an optional embodiment, said components are crushed in step d) to piece sizes screened to less than 5mm. The components, or feedstock components, are preferably fed through the same crushing equipment. Despite this, there may be some differences in the degree of size reduction experienced by individual components depending on the physical characteristics of the components such as the material hardness, friability and elasticity. Steps b), c) and d) may occur simultaneously or in a different order. For example, the components may be crushed and the piece sizes screened before they are mixed and dried. Alternatively, the components may be dried before being crushed and mixed. Where the invention requires screened components, this is, in fact, merely a size limitation, the large majority of the components in question being capable of passing through a mesh of rectangular apertures of maximum size x by x mm, where x is the dimension given.

In accordance with the present invention there is also provided a briquetted fuel comprising the following components:

| Component | % by weight, dry, before torrefaction |
|---|---|
| biomass | 5-30 |
| coal and/or petroleum coke | 50-90 |
| binder | 5-20 |

wherein the torrefied briquette comprises between 10% and 35% volatile hydrocarbons.

In a preferred embodiment, the briquetted fuel comprises: between 15% and 30% biomass; between 50% and 75% coal and/or petroleum coke; and between 5% and 20% binder.

The benefits of the briquetted fuel as described hereinbefore over standard fuels that do not contain torrefied biomass include reduced environmental emissions during combustion whilst achieving overall equivalent fire performance, with improvements in some key performance characteristics.

The main benefits of the in situ torrefaction process described herein include:
- Reduced capital and operational costs since a separate torrefaction plant is not required. The in situ torrefaction process described herein utilises existing plant equipment with no significant impact on operating costs.
- An increase in the amount of torrefied biomass that can be incorporated into the fuel briquette without detriment to briquette yield, strength and appearance. Increasing the amount of torrefied biomass inclusion is associated with reduced emissions of carbon dioxide and other pollutants during combustion.
- Effective control of environmental emissions arising during torrefaction, using the same abatement technologies and equipment as the briquetting process, with potential benefits to regulatory compliance.

### DETAILED DESCRIPTION

The following description provides detailed examples of briquettes manufactured according to the present invention.

The use of torrefied biomass in briquettes is described in GB2448531. That document illustrates the properties of the feedstock components including torrefied wood (i.e. wood that has been torrefied prior to its inclusion in a briquette).

The current invention uses "raw" (i.e. non-torrefied) biomass for briquette formation. One particular type of biomass used is olive stone. Test data for olive stone biomass shows that, compared to the coal and petroleum coke feedstocks, the biomass exhibits significantly higher volatile matter content combined with lower calorific value, carbon, sulphur and (possibly) chlorine contents. This is illustrated in the typical analyses of the briquette feedstock components presented in Table 1.

The lower carbon, sulphur and chlorine contents of the biomass have potential benefits in reduced environmental emissions during the combustion of the briquettes. Specifically, emissions of sulphur dioxide, carbon dioxide, polycyclic aromatic hydrocarbons (PAH) and chlorinated micro pollutants (eg dioxins) are reduced. These environmental benefits are in addition to those associated with the renewable nature of the biomass, making it a climate friendly briquette component.

**Table 1: Comparison of feedstock properties (% dry basis)**

| Property | Biomass (Olive Stone) | Anthracite | High Volatile Coal | Petroleum Coke |
|---|---|---|---|---|
| Ash Content | 0.5-5.0 | 3.0-10.0 | 2.0-8.0 | 0.4-1.0 |
| Volatile Matter Content | 70.0-85.0 | 3.0-9.0 | 30.0-39.0 | 10.0-13.0 |
| Sulphur Content | <0.1 | 0.3-1.5 | 0.5-2.0 | 1.5-5.0 |
| Chlorine Content | <0.05 | 0.01-0.05 | 0.01-0.50 | 0.01-0.10 |
| Carbon Content | 35-45 | 83-90 | 78-84 | >95 |
| Calorific Value (kJ/kg) | 17,000-19,000 | 33,000-35,000 | 31,000-33,000 | 34,000-36,000 |

The high volatile matter content of the raw biomass means that the biomass in isolation would not meet current smoke generation requirements when being burnt. Biomass is able to meet smoke generation requirements after torrefaction, which removes many of the smoke producing volatile components.

The current invention torrefies biomass after its briquetting with other components. As previously mentioned, this process is also termed "in situ torrefaction". To illustrate the behaviour of biomass during in situ torrefaction, comparison is made between feedstock blends containing 0% and 30% biomass addition (% dry weight), with each incorporating 17% molasses/phosphoric acid binder system. Each feedstock blend was briquetted by roll press followed by curing and biomass torrefaction in a reduced oxygen atmosphere at approximately 300°C. The composition of the example blends is given in Table 2 below, together with the volatile matter contents of the cured briquettes, product yields and strengths.

**Table 2: Comparative formulations**

| **Example:** | **1** | **Control** |
|---|---|---|
| Biomass in solid feedstock (% dry basis) | 30 | 0 |

| **Formulation (% weight):** | | |
|---|---|---|
| Biomass (olive stone) | 25 | 0 |
| Coals and petroleum coke | 58 | 83 |
| Molasses/phosphoric acid | 17 | 17 |

| **Briquette properties:** | | |
|---|---|---|
| Predicted volatile matter content (% dry basis) | 32.1 | 18.0 |
| Determined volatile matter content (% dry basis) | 24.0 | 18.1 |
| Product yield - Whole briquettes (%) | 98.5 | 98.0 |
| Product strength - Shatter resistance (% + 40mm) | 90.6 | 89.9 |

Table 2 shows that despite the substantially higher volatile matter content of the biomass component, compared to the other briquetting feedstocks, the volatile matter content of the cured briquettes, produced from the blend containing biomass addition, was significantly lower than that predicted by conventional models (derived for coal based blends). These predictions were based on the analyses of the individual components. This confirms the partial devolatilisation of the biomass (i.e. torrefaction) during briquette curing.

It should be noted that during the curing of briquettes containing coal and/or petroleum coke only (i.e. with no added biomass) no significant devolatilisation of the feedstock solids occurs under the conditions described. Therefore the predicted and determined volatile matter contents were comparable for the blend containing no biomass addition.

Torrefaction requires the heat treatment of biomass to temperatures typically in the range 250°C to 350°C in an oxygen free/controlled environment. This facilitates the partial devolatilisation of the biomass whilst minimising its combustion. This may be conducted after or during curing of the briquettes. The briquette composition of Example 1 was heat treated in a single step (curing and torrefying simultaneously) at approximately 300°C in a controlled and reduced oxygen atmosphere. The briquette was therefore cured and the biomass torrefied in situ during the curing stage of the briquetting operation.

There are two probable contributory mechanisms for in situ torrefaction in the way described. Firstly this may be due to the thermal conditions in the briquette curing oven being comparable with typical conditions encountered in purpose made torrefaction processes. Secondly, during curing the biomass particles are held bound, encapsulated and compacted in close contact with coal and petroleum coke particles within the briquette matrix. The coal and petroleum coke particles are reductants and therefore serve to preserve a localised, oxygen free environment within the briquette structure; thereby facilitating partial devolatilisation of the biomass without significant combustion (i.e. torrefaction). Furthermore, the release of volatile materials from the biomass during heat treatment serves to support the maintenance of an oxygen free environment within the briquettes.

The relatively low concentration of oxygen present in the atmosphere within the curing oven has no relevance to the process described.

The loss of volatile matter during the in situ torrefaction of biomass is important in ensuring that the final product meets UK smoke control standards.

Briquettes produced by this method have relatively large amounts of biomass, at least when compared to the prior art. The current invention permits biomass addition levels of up to and greater than 15% biomass without detrimental effects to the briquette quality; in terms of product yield, strength and appearance. Example 1 contains 30% biomass addition to the solid feedstock mix. It is evident from the data in Table 2 and a visual inspection of produced briquettes that 30% biomass does not have detrimental effects on the briquette quality. Furthermore, there was no evidence of auto-ignition of briquettes during curing.

Table 3 shows the combustion performance of the briquettes on an open fire. The fire performance testing of the cured and torrefied briquettes was carried out on a Parkray Paragon open-fire to industry standard, HETAS-type, three peak, open-fire test procedures. **HETAS** is the official body recognised by the United Kingdom government to approve solid fuel domestic heating appliances, fuels and services in the UK. In addition, briquettes containing 30% biomass were subjected to smoke emission testing, to BS 3841. The table shows that briquettes containing biomass torrefied in situ comfortably achieved UK standards for open fire performance and smoke control.

**Table 3: Summary of Fire Performance Test Results**

| Characteristic | UK Standard | 30% biomass briquette performance |
|---|---|---|
| Ignition time (minutes) | ≤50 | 27 |
| First radiation peak (kW) | ≥2.5 | 3.5 |
| Second radiation peak (kW) | - | 3.9 |
| Third radiation peak (kW) | ≥3.4 | 4.2 |
| Mean radiant output (kW) | ≥2.5 | 2.9 |
| Fire recovery time after first refuel (minutes) | ≤30 | 21 |
| Fire recovery time after second refuel (minutes) | ≤30 | 18 |
| Fire life (time between first and second refuels) (hours) | ≥1.5 | 3.2 |
| Fire life (time between second refuel and 2.5 kW) (hours) | ≥1.5 | 2.6 |
| Smoke emission rate (grams/hour) | <5.0 | 3.9 |

In reviewing the above fire performance data, it is important to consider the main requirements for a domestic smokeless fuel marketed for use on open-fires and multifuel stoves, especially in terms of consumer expectation, and industry and regulatory requirements. The main requirements can be summarised as follows:
- the fuel must comply with UK Smoke Control legislation (unless burnt on an exempted appliance);
- the fuel should ignite quickly and the fire should recover quickly after refuel;
- the fire should give satisfactory radiant heat out into the room;
- the fire should have sufficiently long periods between refuels for consumer convenience;
- high and attractive flames should develop quickly and be maintained during ignition and after refuel;
- the fuel should leave minimal waste at the end of combustion;
- the fuel must not be associated with excessive spitting during combustion;
- the briquettes should be of good appearance and mechanical strength;
- the fuel should be consistent with environmental expectations and objectives;
- ideally, the fuel should meet industry standard fire performance criteria;

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A process for the production of a fuel briquette comprising the steps of:
a) providing components comprising: biomass; and, coal and/or petroleum coke;
b) mixing the components;
c) drying the components;
d) crushing the components;
e) forming a feedstock by mixing the components with a binder in the following proportions:
| Component | % by weight, dry |
|---|---|
| biomass | 5-30 |
| coal and/or petroleum coke | 50-90 |
| binder | 5-20 |
f) briquetting the feedstock; and, after steps a) - f) have been performed
g) curing the binder and torrefying the briquette.

2. A process as claimed in claim 1, in which the biomass is substantially inelastic.

3. A process as claimed in any preceding claim, in which said coal comprises from 20-90% by weight anthracite, optionally between 40% and 70% by weight.

4. A process as claimed in any preceding claim, in which said coal comprises bituminous coal.

5. A process as claimed in claim 4 in which there is up to 30% by weight of said bituminous coal, optionally between 10% and 20% by weight thereof.

6. A process as claimed in any preceding claim, in which said volatile matter content of the biomass is between 70% and 85% by weight.

7. A process as claimed in any preceding claim, in which said torrefying step occurs at a temperature between 250°C and 350°C, optionally 275°C and 325°C, and further optionally between 290°C and 310°C.

8. A process as claimed in claim 7, in which said torrefying step occurs in a substantially oxygen-free atmosphere, wherein said atmosphere is substantially inert, this inertness being supported by the release of water vapour, volatile matter and gases from the briquetted feedstock as it is heated, said gases progressively displacing air from the atmosphere as the feedstock is heated.

9. A process as claimed in claim 8, in which said displaced air comprises oxygen.

10. A process as claimed in claim 9, in which the inertness of said atmosphere is further maintained by a flow of hot, gaseous products of combustion from natural gas burners; supported by the release of moisture, volatiles and gases from the heated briquettes.

11. A process as claimed in any preceding claim, in which torrefaction of the briquetted biomass is terminated by quenching the briquette in water, or dry cooling the briquette using an inert gas.

12. A process as claimed in any preceding claim, in which steps b), c) and d) occur sequentially.

13. A process as claimed in any preceding claim, in which said components are crushed in step d) to piece sizes screened to less than 5mm.

14. A process as claimed in any of the preceding claims wherein the torrefied briquette comprises between 10% and 35% volatile hydrocarbons.

15. A briquetted fuel comprising the following components:
| Component | % by weight, dry, before torrefaction |
|---|---|
| biomass | 5-30 |
| coal and/or petroleum coke | 50-90 |
| binder | 5-20 |
wherein the torrefied briquette comprises between 10% and 35% volatile hydrocarbons and, preferably, wherein the briquetted fuel comprises the following components:
| Component | % by weight, dry, before torrefaction |
|---|---|
| biomass | 5-30 |
| coal and/or petroleum coke | 50-75 |
| binder | 5-20 |
